Europäisches Patentamt

**European Patent Office**

**Office européen des brevets**

(11) Publication number: **0 122 738**
**A1**

(12) **EUROPEAN PATENT APPLICATION**

(21) Application number: **84301924.1**

(51) Int. Cl.³: **E 03 D 1/32**

(22) Date of filing: **21.03.84**

(30) Priority: **21.03.83 ZA 831950**

(43) Date of publication of application:
**24.10.84 Bulletin 84/43**

(84) Designated Contracting States:
**AT BE CH DE FR GB IT LI LU NL SE**

(71) Applicant: **Float Valves (Proprietary) Limited**
**12A The Barclay 70 Plein Street**
**Johannesburg(ZA)**

(72) Inventor: **Grant, Rixwell Slessor**
**12A The Barclay 70 Plein Street**
**Johannesburg(ZA)**

(74) Representative: **Blanco White, Henry Nicholas et al,**
**ABEL & IMRAY Northumberland House 303-306 High**
**Holborn**
**London WC1V 7LH(GB)**

(54) **Cistern valve.**

(57) A valve (10) for a flushing toilet comprises a housing (12) which is externally screw threaded and provided with a central bore (24) and primary and secondary closure members which open at different stages during the operation of the valve. An advantage of the invention is that the surface area of the closure member is small hence requiring less effort to unseat during use.

FIG 2

EP 0 122 738 A1

Croydon Printing Company Ltd

"Cistern Valve"

This invention relates to a float operated valve of the type in which the inlet to the valve is controlled by a plunger which closes in sympathy with the pressure of the water in the mains and which opens by being raised off the seat in response to the downward movement of the float in a cistern, for example.

Float valves of this type are known which include an inlet and an outlet, the outlet being controlled by a primary valve which has a secondary valve extending therethrough for actuation by the float lever a float prior to actuation of the primary valve, whereby the secondary valve presents a fraction of the area of the primary valve to the pressure of water.

Several such arrangements are known in the prior art. For example, in United States patent 3011515 (C.Kravagna) shows, in Figure 5, a lever 66 which raises the secondary valve 57 from the seat in the primary valve 48 to permit a limited flow through the primary valve; in Figure 7, the primary valve is lifted from its seat 30, and the water passes through the cylindrical passageway 31. The secondary valve has a spigot 60 which is guided in the blind passage 61.

French Patent No. 2090716 describes a valve for a centrifugal pump. The invention relates to a primary portion 17 and a secondary portion 21 slideable in the primary portion and sealable therein. A compression spring keeps the two portions in a closed position.

United States patent 1992214 teaches the use of the primary valve 43 and a secondary, or relief, valve 45 slideable therein and sealing with it.

British Patent 276 892 shows a primary element A and a secondary element G slideable in A .

It is an object of the present invention to provide a float valve assembly which has certain advantages having regard to the prior art, the advantages deriving from a combination of features of the assembly.

According to the invention, a float valve assembly of the type referred to above is characterized in that:

a) The primary and secondary valves are in direct communication with the inlet pressure;

b) The primary valve has an O-ring sealable engageable with the outlet, and the secondary valve having a stem extendible through the primary valve and having a formation at its lower end of diameter greater than the diameter of the orifice through the first valve to accomodate the stem, an O-ring in the body of the primary valve against which the head of the secondary valve sealingly engages; the secondary valve having an upwardly extending guide member slideable in a removable blind bore; and

c) The formation at the end of the stem of the secondary valve is unconnected to the end of the float lever.

For easy assembly of the invention the primary valve has a centrally located orifice adapted to permit forced passage of the guide member, the head and the stem of the secondary valve.

A compression spring may be located on the guide member between the head of the secondary valve and the end of the blind bore.

It will be appreciated that the formation at the lower end of the stem of the secondary valve serves to prevent the secondary valve from being removed upwardly through the primary valve, and this formation is also adapted to engage the lever.

In a preferred form of the invention the secondary closure member comprises a first formation, the underside of which is frusto conical to seal with an O-ring or the like located in a recess in the upper surface of the primary closure member.

The assembly of the valve of the invention is achieved by first locating the secondary closure member in position through the orifice provided in the primary closure member, and then slipping the O-ring over the upper formation of the secondary closure member until it seats in the recess provided in the primary closure member .

Preferably the lever is arranged for rotation on its axis for movement on a fulcrum between a first position in which the primary and secondary closure members are seated in their respective seats, to a second position in which the secondary closure member is raised from its seat, to a third position in which the primary closure member is raised from its seat. The axis of rotation of the lever is preferably located transversely to the direction of movement of the closure member.

The inlet and outlet preferably comprise fluid passages disposed substantially at right angles to each other with the closure members in their corresponding seating formations located at the confluence of these passages. The heads of the primary and secondary closure members are preferably planar, and disposed in the same axis as the direction of entry of fluid in the passage. The area of the head of the secondary closure member is preferably substantially less than the area of the head of the primary closure member.

The valve preferably has a housing adapted for mounting in a toilet cistern and the float being arranged for location in the fluid reservoir of the cistern. The invention also includes the optional provision of a water velocity inhibitor, preferably in the form of a helix of a plastic material which is pressed into the inlet just in advance of the closure members.

An embodiment of the invention is described by way of example with reference to the accompanying drawings in which:

Figure 1 is a fragmentary section of a valve according to the invention;

Figure 2 is a detail of the primary and the secondary closures and other features of the invention; and

Figure 3 is a side sectional view of a water velocity inhibitor.

Referring to the drawings, the valve 10 comprises a housing 12 having primary and secondary closure members 14,16 actuated by a float control lever 18.

The housing has an externally threaded shank 20 at an end of which is formed a collar 22. The central bore 24 formed in the shank narrows into an inlet passage 26 and an outlet passage 28. The inlet and outlet passages 26,28 are disposed at right angles to each other. A plug 30 having a blind bore 32 is screw threaded in an extension 34 formed in the outlet passage 28.

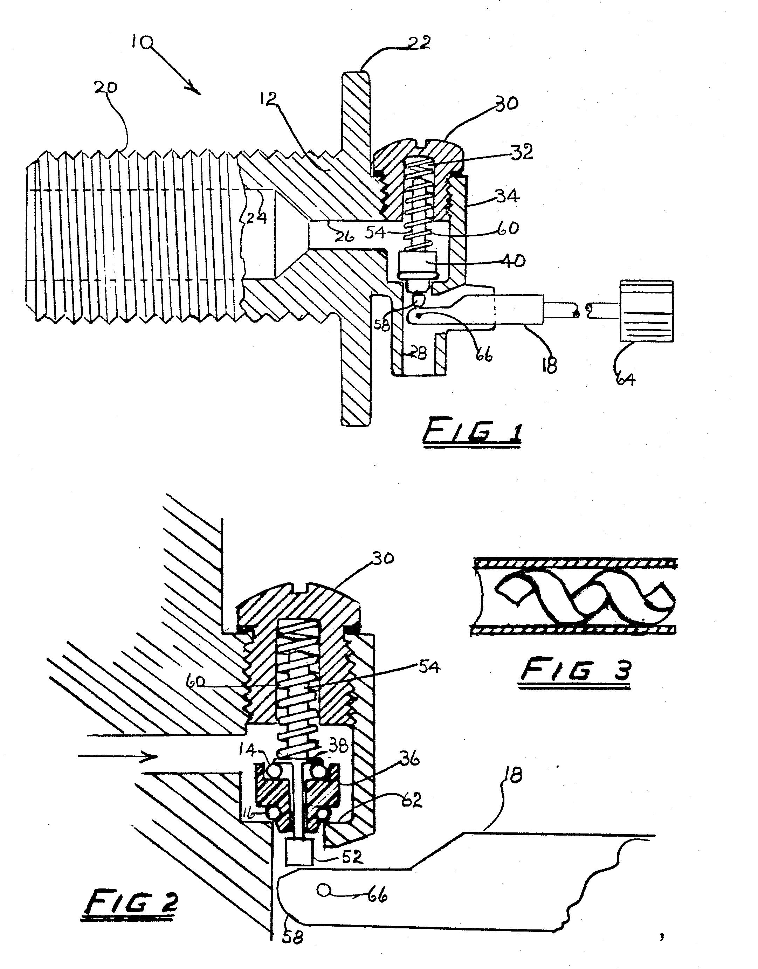

The primary and secondary closure members 14,16 each comprise O-rings and are housed in the valve assembly body 40, and are designed to seat within the body 40 and housing outlet face 62 respectively. The valve assembly stem 54 carries a compression spring 60 designed to keep the closure members seated. It can be readily seen from the drawings that the float controlled lever 18 actuates the valve stem extension 52 in an upward direction causing the primary closure O-ring 14 to unseat thus relieving the pressure on the valve assembly to facilitate the upward movement of secondary closure member 16. In order to simplify Fig. 2, the primary and secondary closure O-rings 14, 16 have been shown almost the same size, but the primary closure O-ring 14 is actually of considerably smaller diameter than the secondary closure O-ring 16.

It will be noted that the diameter of the formation 52 at the lower end of the valve stem extension is greater than the diameter of the passage through the body 40.. This serves to prevent the stem from being drawn upwardly through the body. It will also be noted that there is no connection between the enlarged portion 52 and the end of the float lever 58, as is the case in certain of the prior art inventions.

The lever 18 has an axis of rotation 66 which is in line with the stem 54.

The configuration of this valve assembly leads to it being particulary adaptable for either high or low pressure operations.

In use of the invention the valve 10 is mounted in a toilet cistern (not seen in the drawings) in the conventional manner with all the necessary plumbings. In the position seen in the drawings the cistern would normally be filled with water, thus raising the float 64 to a horizontal position. In this position the mains water pressure in the inlet 26 firmly seats the closure members 14,16 against their respective seats. When the volume of water in the cistern decreases as would occur when the toilet was flushed, the level of the float drops. This causes the cam surface 58 to ride the lower end of the stem 52.   At the preliminary or first stages of movement of the  float 64  only the  primary closure member 14  is unseated to permit water to flow past. As the float descends further,  the seconday closure member 16  is also unseated due to the action of the cam surface 58.  The valve in this position is fully open.

The opening  of the  closure  members  14,16  is facilitated  due  to  the  lower  amount  of  effort required.    As the  surface area  of the head 38 is considerably less than the surface area of  the head of valve body 36,  less effort is required to unseat the head 38.   As the head 38 is unseated, a drop in the pressure  of water in the inlet 26 occurs.   The float 64  which  would  still be  descending,  then unseats the  head 36  at a time when the pressure in the inlet 26 is relatively lower.  When the valve 10 closes,  the  reverse action  occurs with the result that the closure members 14,16 close in sequence.

Figue 3 shows  a water  velocity inhibitor which is housed upstream  with the  closure members.   It is helical in  construction and  inparts  a  vortex flow instead of  a direct  flow which  could,   at  high pressure, disturb the O-ring 14.

CLAIMS:

1.

A float valve assembly including an inlet and an outlet, the outlet being controlled by a primary valve which has a secondary valve extending therethrough for actuation by the lever of a float prior to actuation of the primary valve whereby the secondary valve presents a fraction of the area of the primary valve to the pressure of water, characterised in that:

a. the primary and secondary valves are in direct communication with the inlet pressure ;

b. the primary valve has an O-ring sealably engageable with the outlet and the secondary valve having a stem extendable through the primary valve and having a formation at its lower end of diameter greater than the diameter of the orifice through the first valve to accommodate the stem, an O-ring in the body of the primary valve against which the head of the secondary valve sealingly engages; the secondary valve having an upwardly extending guide member slidable in a removable blind bore ;

c. the formation at the end of the stem of the secondary valve is unconnected to the end of the float lever.

2.

The float valve assembly of claim 1 in which the primary valve has a centrally located orifice adapted to permit forced passage of the guide member, the head and the stem of the secondary valve.

3.

The float assembly of claim 1 or claim 2 in which a compression spring is located on the guide member between the head of the secondary valve and the end of the blind bore.

FIG 1

FIG 2

FIG 3

## European Patent Office

## EUROPEAN SEARCH REPORT

### DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| X | AT-B- 1 407 (HOSSTRUP) * Complete document * | 1,2 | E 03 D 1/32 |
| X | AT-B- 1 411 (HOSSTRUP) * Complete document * | 1,2 | |
| X | GB-A- 927 733 (KRAVAGNA) * Page 2, lines 4-127; figures 1-7 * & US-A-3 011 515 (Cat. D) | 1,2 | |
| A | US-A-2 854 023 (HEYER) * Complete document * | 1 | |
| A | US-A-2 900 996 (GOLDTRAP) * Column 2, lines 48-50; figure 6 * | 1 | TECHNICAL FIELDS SEARCHED (Int. Cl. 3) |
| A | FR-A- 772 717 (FARTHOUAT & CHAUVEAU) * Page 1, lines 35-40; figure * | 3 | E 03 D 1/00 |
| D,A | FR-A-2 090 716 (H. SYKES LTD.) | | |

----

The present search report has been drawn up for all claims

| Place of search | Date of completion of the search | Examiner |
|---|---|---|
| BERLIN | 06-06-1984 | PAETZEL H-J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82